# FASCICULE DE BREVET EUROPEEN

(11) **EP 1 445 055 B1**
(45) Date de publication et mention de la délivrance du brevet: **30.04.2008**
(21) Numéro de dépôt: 04300047.0
(22) Date de dépôt: 27.01.2004
(51) Int. Cl.: B23K 9/095

(54) **Générateur de courant de soudage avec réglage du type de joint et de la position de soudage**
Elektrische Stromversorgung für eine Schweisseinrichtung mit Steuerung der Schweissverbindung und der Schweissstellung
Welding power with control means for the welding joint and the welding position

(30) Priorité: 05.02.2003 FR 0301320
(43) Date de publication de la demande: 11.08.2004
(73) Titulaire: AIR LIQUIDE WELDING FRANCE, 75007 Paris (FR); L'AIR LIQUIDE, Société Anonyme pour l'Etude et l'Exploitation des Procédés Georges Claude, 75007 Paris (FR)
(72) Inventeur: Reymond, Christian, 95160 Montmorency (FR); Briand, Francis, 75009 Paris (FR); Eyschen, Jean-Pierre, décédé (FR); Norbert, Francoise, 38490 Saint Ondras (FR); Plottier, Gérard, 93380 Pierrefitte (FR)
(74) Mandataire: Pittis, Olivier

(56) Documents cités:
- EP-A- 0 901 865
- EP-A- 0 988 914
- WO-A-03/022503
- US-A- 6 075 225
- US-B1- 6 476 354

## Description

La présente invention concerne un dispositif et un procédé de soudage à l'arc, tel qu'un générateur de courant de soudage, comportant des moyens permettant à un opérateur de trouver immédiatement et facilement le réglage du poste désiré en fonction du type de joint à souder et/ou la position de soudage qu'il veut adopter.

Un poste de soudage à l'arc possède habituellement une face avant sur laquelle sont disposés des moyens de réglage du procédé de soudage à mettre en oeuvre et/ou du poste lui-même.

Cette face avant est, en général, composée de plusieurs blocs ou pavés qui ont chacun leurs propres fonctionnalités.

La face avant du poste de soudage peut ainsi comporter, par exemple, un bloc de réglage du courant, de la tension, de la vitesse fil ou de l'épaisseur des tôles à souder ; un bloc de sélection du couple fil/gaz à utiliser, notamment en soudage MIG (Metal Inert Gas) ; un bloc de sélection des paramètres du procédé à mettre en oeuvre, notamment courant lisse ou pulsé... ; ou encore un bloc de paramétrage du cycle de soudage.

Des postes de soudage équipés de moyens de sélection de ce type sont notamment décrits par les documents WO-A-03/022503, EP-A-901865, US-A-6,075,225 et US-A-6,476,354.

Quand un opérateur utilise le poste, il doit d'abord paramétrer le cycle de soudage envisagé et choisir le couple fil/gaz qu'il va utiliser.

Ensuite, il détermine à la fois le procédé qu'il veut utiliser et le réglage de son poste, en fixant la valeur du courant, de la tension, de la vitesse fil ou de l'épaisseur à souder, qu'il estime la plus adaptée pour permettre de souder correctement les pièces à souder, compte tenu de l'assemblage qu'il veut réaliser.

Or, il arrive très souvent qu'il soit obligé de modifier ces réglages car il n'a pas obtenu la pénétration ou le mouillage désiré.

C'est le cas, en général, quand l'assemblage qu'il réalise n'est pas un assemblage à plat, position retenue par la majorité des constructeurs pour établir les synergies.

En effet, la plupart des courbes de synergie qui sont incorporées ou mémorisées dans un poste de soudage ont été établies pour un type d'assemblage particulier, en général des pièces à souder mises bout-à-bout à plat.

L'opérateur doit donc procéder à des modifications si le type de joint à souder et la position de soudage choisie sont différents, ce qui l'oblige à entamer alors un processus d'essais/erreurs qui est fastidieux, prend du temps et est basé uniquement sur la pratique.

De là, le problème qui se pose actuellement est de pouvoir faciliter le réglage d'un poste de soudage par un opérateur lorsque celui-ci souhaite réaliser un soudage d'un type de joint spécifique et/ou dans une position de soudage particulière, que ce type de joint et/ou cette position de soudage correspondent ou, au contraire, ne correspondent pas à un soudage classique de pièces à souder mises bout-à-bout à plat, et de ce fait, de diminuer le nombre de passes de soudage à effectuer.

En d'autres termes, le but de l'invention est de permettre à l'opérateur de trouver immédiatement et facilement le réglage du poste désiré en fonction du type de joint à souder, principalement bout-à-bout et en angle, et la position de soudage qu'il veut adopter, principalement à plat et en montant.

La solution de l'invention est alors un dispositif de soudage selon la revendication 1 et un procédé selon la revendication 10.

Selon le cas, le dispositif de l'invention peut comprendre l'une ou plusieurs des caractéristiques techniques suivantes :
- les moyens de sélection sont adaptés ou conçus pour permettre une sélectionner par l'opérateur d'un ou plusieurs des paramètres primaires, à savoir type de joint à souder et/ou position de soudage. En effet, pouvoir réaliser une sélection de ces paramètres particuliers n'existe pas sur les postes de soudage de l'état de la technique.
- les moyens de sélection permettent, en outre, de sélectionner un ou plusieurs paramètres secondaires choisis parmi l'épaisseur à souder, le type de métal à souder, la nature ou le diamètre du fil de soudage, le type de gaz à utiliser, le type de procédé de soudage et le type de régime de transfert désiré. Selon le cas, les paramètres secondaires peuvent être soit choisi par l'opérateur, comme les paramètres primaires, soit proposés ou suggérés par le dispositif lui-même en fonction des paramètres primaires choisis par l'opérateur et de tables de corrélation pré-définies mémorisées.
- le dispositif de l'invention peut prendre des formes diverses, en particulier il peut être intégré ou constituer, tout ou partie, d'un générateur de courant de soudage, d'une commande à distance de générateur de courant de soudage, un dévidoir de fil de soudage, un ordinateur ou analogue.
- les moyens de sélection sont manoeuvrables manuellement ou digitalement ou vocalement par l'opérateur.
- les moyens de sélection comprennent au moins un organe d'actionnement mobile entre plusieurs positions, chacune desdites positions correspondant à un type de joint à souder et/ou à une position de soudage.
- les moyens de sélection permettent de sélectionner au moins un type de joint à souder choisi parmi les assemblages à clin, en soyage, bout-à-bout ou en angle, avec ou sans préparation, tel qu'un chanfrein, un talon ou autre.
- les moyens de sélection permettent de sélectionner au moins une position de soudage choisie parmi un soudage à plat, un soudage incliné et un soudage vertical, montant ou descendant, ou en corniche.
- il est un générateur de courant de soudage comprenant un carrossage externe comportant une face avant sur laquelle sont agencés lesdits moyens de sélection, de préférence lesdits moyens de sélection sont incorporés au sein d'un bloc de sélection.
- lesdits moyens de sélection coopèrent avec des moyens de mémorisation de manière à sélectionner et à afficher, sur des moyens d'affichage, la vitesse du fil et/ou la longueur d'arc et/ou le courant de soudage.
- lesdits moyens de sélection comprennent un ou plusieurs boutons ou touches de sélection.
- il comprend des moyens d'affichage de passes permettant d'afficher ou d'indiquer à l'opérateur le nombre de passes à effectuer ou ayant été effectuées.

L'invention porte aussi sur un procédé de soudage à l'arc électrique mettant en oeuvre un poste de soudage à l'arc, en particulier un dispositif selon l'invention, dans lequel :
a) on sélectionne, avant le début du soudage, au moins paramètre primaire choisi parmi le type de joint à souder, la position de soudage et leurs combinaisons, correspondant au type de joint à réaliser et/ou à la position de soudage adoptée,
b) on opère le soudage des pièces à assembler après avoir effectué la sélection de l'étape a).

De préférence, le type de joint à souder est choisi parmi les assemblages à clin, en soyage, bout-à-bout ou en angle, avec ou sans préparation, et la position de soudage est choisie parmi un soudage à plat, en corniche, incliné et vertical, montant ou descendant, ou en corniche.

L'invention est illustrée sur les figures ci-annexées données à titre illustratif mais non limitatif.

L'invention est basée sur le fait d'incorporer, par exemple, à la face avant d'un poste de soudage, sur le dévidoir de fil (cas du soudage MIG) ou sur la commande à distance permettant de commander à distance le poste de soudage, un bloc supplémentaire qui évite les ajustements fastidieux et qui permette à l'opérateur de sélectionner directement un type de joint et/ou une position de soudage, puis en fonction de cette sélection, de l'assister dans la détermination de tout ou partie des paramètres de soudage nécessaires ou indispensables à l'obtention d'un cordon de soudage de bonne qualité.

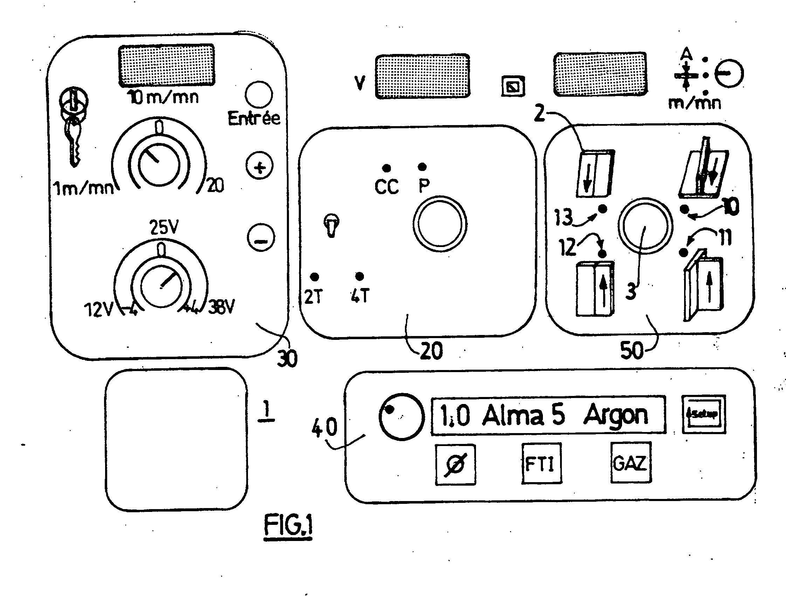

La figure 1 ci-jointe schématise la face avant 1 d'un poste de soudage à l'arc selon l'invention comportant des moyens de sélection 2, 3 sur sa face avant 1, du type de joint et de la position de soudage 10 à 13.

Plus précisément, la face avant 1 du poste comporte plusieurs blocs classiques dont :
- un bloc 20 de choix de paramètres de cycle ou du procédé ou régime de transfert, tel que soudage maintenu ou par impulsions exercées sur la gâchette de la torche (2T, 4T), procédé par court-circuit (CC) ou pulsé (P)...
- un bloc 30 de réglage du point de fonctionnement du poste avec choix de la vitesse du fil et réglage de la tension U, et
- un bloc 40 de visualisation avec afficheur, par exemple à cristaux liquides ou analogues, et de réglage de paramètres de soudage, tel que diamètre et nature du fil ou type de gaz de soudage.

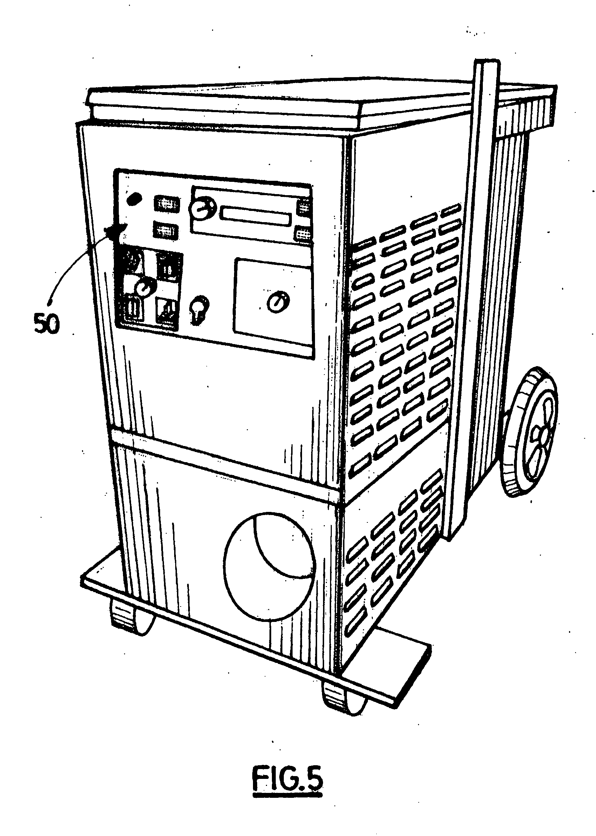

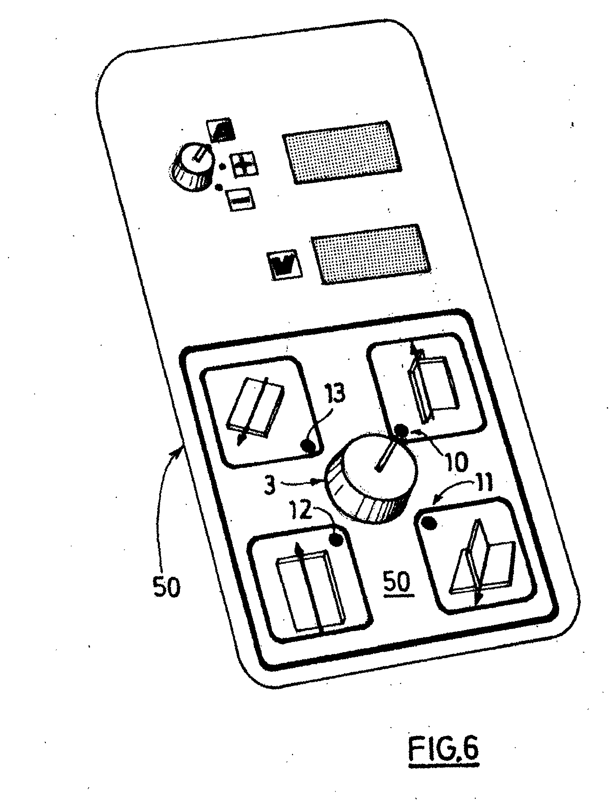

Par ailleurs, cette face avant 1 incorpore aussi un bloc 50 supplémentaire avec des moyens de sélection 2 du type de joint et de la position de soudage comportant un sélecteur 3 de position, tel un commutateur rotatif pouvant être déplacé par l'opérateur dans plusieurs positions angulaires 10 à 13, les différentes positions angulaires 10 à 13 étant représentatives du type joint à effectuer et de la position de soudage. Ceci est également visible sur la figure 6 qui est une vue agrandie d'une partie de la face avant du générateur de la figure 5 intégrant la présente invention.

Ainsi, la position 10 correspond à un soudage à effectuer à plat et en angle, sur des pièces en position inclinée ; la position 11 correspond à un soudage à effectuer dans le sens de la montée, en angle et sur des pièces en position verticale ; la position 12 correspond à un soudage à effectuer dans le sens de la montée et en position verticale, sur des pièces mises bout-à-bout jointifs ; et la position 13 correspond à un soudage à effectuer à plat sur des pièces mises bout-à-bout jointifs.

En face des différentes positions angulaires 10 à 13, il a été représentés des schémas des différents types ou configurations de joint et positions de soudage correspondant à ces positions angulaires 10 à 13. Ces schémas peuvent être gravés sur la face avant du poste ou être imprimés sur des étiquettes qui y sont collées. En outre, ces schémas peuvent être aussi remplacés par d'autres repères analogues.

Le sélecteur de position 3 peut revêtir différentes formes et n'est pas nécessairement rotatif. Ainsi, il peut se présenter sous forme de touches ou de boutons à actionnement digital, chaque touche ou bouton correspondant à un type ou une configuration de joint et une position de soudage. On peut aussi imaginer utiliser un curseur mobile en translation entre plusieurs positions chacune représentative, là encore, d'un type ou d'une configuration de joint et d'une position de soudage.

L'invention est préférentiellement utilisée en soudage manuel mais elle peut aussi s'appliquer au soudage automatique.

Lorsqu'il souhaite opérer un soudage avec un dispositif selon l'invention, l'opérateur choisit son type d'assemblage et la position de soudage en choisissant la position angulaire 10 à 13 désirée qui correspond à la soudure qu'il doit réaliser.

Ensuite, l'opérateur sélectionne, à l'aide des moyens de sélection du dispositif, tout ou partie des autres paramètres du Tableau I qui correspondent à l'opération à réaliser.

**Tableau I**

| Position de soudage | Epaisseur à souder | Type de métal | Diamètre du fil (mm) | Type de gaz | Type de procédé |
|---|---|---|---|---|---|
| A plat | 1 à 12 mm (par pas de 0.5 à 1 mm) | acier | 1.6 | Sélection en fonction du métal à souder | pulsé bas bruit |
| Bord à bord | | acier inox | 1.2 | | arc pulsé |
| Vertical | | aluminium | 1 | | court-circuit |
| Angle | | | 0.8 | | |

En fonction des paramètres sélectionnés, le dispositif de soudage va aller retrouver dans sa mémoire un point de fonctionnement dans une synergie donnée (courbe pré-enregistrée) correspondant aux paramètres sélectionnés, c'est-à-dire notamment des valeurs de vitesse de fil (Vfil) et de hauteur d'arc à adopter, et le nombre de passes à effectuer.

Le dispositif pourrait aussi répondre par deux points de fonctionnement dans la partie où il y a recouvrement entre les synergies sans et avec préparation.

Il est à souligner que l'opérateur pourrait aussi imposer le critère de choix "avec" ou "sans préparation", lors de la sélection des paramètres.

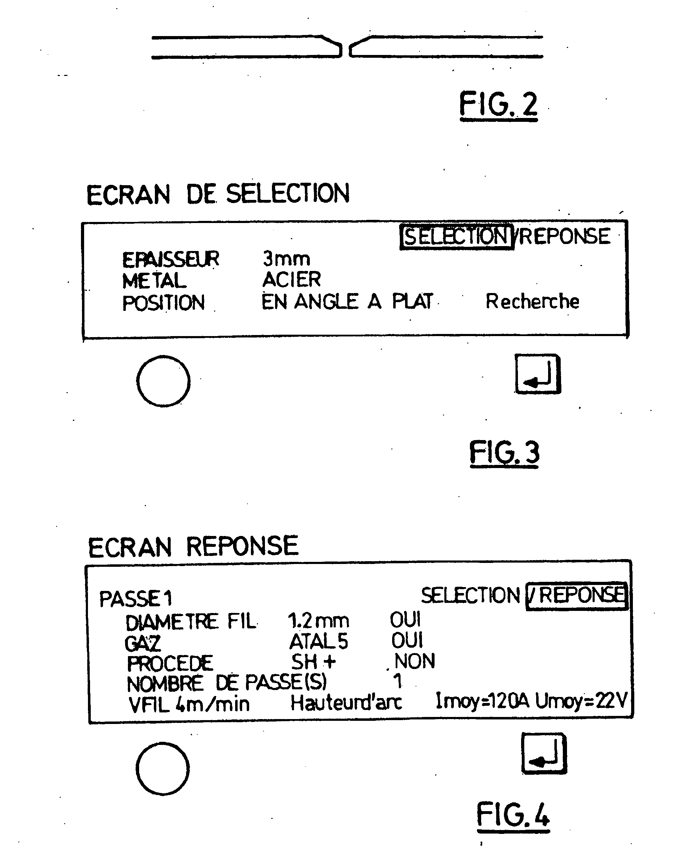

Les différents points de fonctionnement pourront être obtenus de manière empirique par soudage d'une préparation témoin, comme celle montrée en figure 2, puis incorporés dans une base de données du dispositif
ou en liaison avec celui-ci.

Dans la base de données, on doit retrouver toutes ces informations, comme montré en Tableau II, pour les diamètres de fils en fonction de l'épaisseur à souder, avec ou sans la préparation de la figure 2, et en Tableau III pour ce qui concerne l'épaisseur et le régime de transfert obtenues, par exemple, pour un fil de 1.2 mm de diamètre en acier doux 70S, sur des pièces en configuration bord-à-bord en verticale montante et sans préparation, avec une torche de soudage de 450W alimentée en courant par un générateur de LA SOUDURE AUTOGENE FRANCAISE commercialisé sous la référence 480 TRI et avec gaz ATAL 5 de L'AIR LIQUIDE (18% en volume de CO₂ + Argon pour le reste).

**Tableau II**

| | | | | | | | | | | | |
|---|---|---|---|---|---|---|---|---|---|---|---|
| Epaisseur (mm) | 1 | 1.5 | 2 | 2.5 | 3 | 4 | 5 | 6 | 8 | 10 | 12 |
| Sans préparation | 1 | 1.5 | 2 | 2.5 | 3 | 4 | 5 | 6 | | | |
| Avec préparation (*) | | | | | | 4 | 5 | 6 | 8 | 10 | 12 |

| | | | | | | | | | | | |
|---|---|---|---|---|---|---|---|---|---|---|---|
| (*) : plusieurs passes si nécessaire | | | | | | | | | | | |

**Tableau III**

| | | | | | | | | | |
|---|---|---|---|---|---|---|---|---|---|
| Epaisseur (mm) | 0.8 | 1 | 1.5 | 2 | 2.5 | 3 | 4 | 5 | 6 |
| Transfert | | Arc pulsé | | | | | | | |
| Vitesse fil (m/min) | | | | 1.8 | 2 | 2.1 | 2.3 | 2.6 | 3 |
| Longueur d'arc (V) | | | | 32 | 33 | 32.6 | 33 | 33 | 34 |
| Tension moyenne (V) | | | | 20.8 | 21.2 | 21.2 | 20.4 | 20.2 | 20.6 |
| Intensité moyenne (A) | | | | 62 | 68 | 70 | 74 | 80 | 88 |

Des tableaux de correspondances similaires doivent donc être mémorisés pour tous les paramètres possibles : position de soudage, épaisseur des pièces à souder, type de métal, diamètre du fil, type de gaz, type de procédé... On doit donc avoir en mémoire du poste une arborescence englobant tous les cas possibles obtenus par exemple en réalisant des essais de soudage de manière empirique.

Ensuite, en fonction de critères fixes que l'on a pondéré en amont, à partir des paramètres position de soudage, épaisseur des pièces à souder, type de métal, diamètre du fil, type de gaz, type de procédé, le dispositif va rechercher le point de fonctionnement correspondant.

Les trois premières données (position de soudage, épaisseur des pièces à souder, type de métal) sont généralement imposées par l'opérateur, tandis que la question des degrés de liberté se pose sur les autres paramètres, c'est-à-dire type d'assemblage si il y a lieu (avec ou sans préparation), une ou plusieurs passes, vitesse du fil, intensité moyenne (Imoy), tension moyenne (Vmoy) et longueur d'arc (Larc).

Ainsi, pour effectuer, en verticale montante, une soudure sur pièces en acier d'épaisseur de 3 mm mises bord à bord, il existe plusieurs solutions possibles en fonction du diamètre du fil, du type de gaz, du type de procédé et du critère de performance retenu, c'est-à-dire un critère de productivité ou de qualité, ou les deux ; celles-ci sont données dans le tableau II ci-après.

**Tableau III**

| Diamètre fil (mm) | Type de gaz | Type de procédé | Critère de performance (*) |
|---|---|---|---|
| 1.6 | ATAL 5 | Court-circuit | 1 |
| | | Pulsé | 2 |
| | | Court-circuit + | 3 |
| | CO₂ | Court-circuit | 4 |
| | | Court-circuit + | 5 |
| | ARCAL 14 | Pulsé | 6 |
| 1.2 | ATAL 5 | Court-circuit | 7 |
| | | Pulsé | 8 |
| | | Court-circuit + | 9 |
| | CO₂ | Court-circuit | 10 |
| | | Court-circuit + | 11 |
| | ARCAL 14 | Pulsé | 12 |
| 1 | ATAL 5 | Court-circuit | 13 |
| | | Pulsé | 14 |
| | | Court-circuit + | 15 |
| | CO₂ | Court-circuit | 16 |
| | | Court-circuit + | 17 |
| | ARCAL 14 | Pulsé | 18 |

| | | | |
|---|---|---|---|
| (*) : Valeurs arbitraires | | | |

Court-circuit + : soudage en court-circuit sur plage de valeurs de vitesse fil étendue par rapport au soudage en court-circuit simple
ATAL 5 de composition : 18% en vol. de CO₂ + argon
ARCAL 14 de composition : 3% en vol. de CO₂ + 1 % de O₂ + argon

Les gaz ATAL 5 et ARCAL 14 sont commercialisés par la société L'AIR LIQUIDE.

Par ailleurs, la figure 3 représente un écran de sélection avec un menu possible de sélection (mode sélection) d'un générateur de soudage selon l'invention comportant des moyens de sélection permettant de choisir des paramètres primaires et secondaires, non seulement position de soudage et type de joint à souder mais aussi l'épaisseur des pièces....

Avant soudage, l'opérateur choisit sur cet écran les paramètres désirés, par exemple soudage à plat, acier et 3 mm, respectivement, dans l'exemple illustré.

Cette sélection engendre alors une interrogation de la base de données mémorisées dans le générateur, comme expliqué ci-avant, et subséquemment le poste va afficher sur l'écran un jeu de paramètres conseillés les plus adaptés à la sélection de l'opérateur.

Ensuite, l'opérateur sera libre d'adopter ces paramètres ou, à l'inverse, de ne pas en tenir compte ou les modifier.

Pour une sélection correspondant à la figure 3, le poste va par exemple afficher les paramètres donnés en figure 4, à savoir dans cet exemple, le nombre de passe à réaliser (ici 1 passe), le diamètre du fil à choisir (1.2 mm), le type de gaz à utiliser (ATAL par exemple), le procédé...

L'opération de soudage peut alors débuter et se dérouler dans les conditions que le générateur de soudage aura considérées comme les plus adaptées à l'opération à réaliser.

De façon générale, la base de donnée comportant des différentes tables de données peut être stockée dans une mémoire du générateur de type EPROM, disque dur, mémoire flash ou autre.

Le traitement des bases de données mémorisées se fait, quant à lui, via un microcontroleur en fonction des informations sélectionnées par l'opérateur.

Un logiciel adapté exploite la base de données de manière à répondre au mieux aux critères internes du poste de soudage ou fixés par l'opérateur.

## Revendications

1. Dispositif de soudage comportant des moyens de sélection (2, 3, 10-13) permettant à un opérateur de sélectionner, avant le début du soudage, au moins paramètre primaire choisi parmi le type de joint à souder, la position de soudage et leurs combinaisons, les moyens de sélection étant manoeuvrables manuellement ou digitalement par l'opérateur, **caractérisé en ce que** :
- lesdits moyens de sélection (2, 3, 10-13) comprennent au moins un organe d'actionnement (3) mobile entre plusieurs positions, chacune desdites positions correspondant à un type de joint à souder et/ou à une position de soudage, et
- lesdites positions (10-13) sont repérées par des schémas ou des repères correspondant auxdits différents types de joints et positions de soudage de manière à permettre à l'opérateur de réaliser directement une sélection d'un type de joint à souder et/ou d'une position de soudage par manoeuvre dudit organe d'actionnement (3) mobile et positionnement de celui-ci en regard d'une desdites positions (10-13) repérées.

2. Dispositif selon la revendication 1, **caractérisé en ce que** les moyens de sélection (2, 3, 10-13), permettent, en outre, de sélectionner un ou plusieurs paramètres secondaires choisis parmi l'épaisseur à souder, le type de métal à souder, la nature ou le diamètre du fil de soudage, le type de gaz à utiliser, le type de procédé de soudage et le type de régime de transfert désiré.

3. Dispositif selon l'une des revendications 1 ou 2, **caractérisé en ce que** les moyens de sélection (2, 3, 10-13) permettent de sélectionner au moins un type de joint à souder choisi parmi les assemblages à clin, en soyage, bout-à-bout ou en angle, avec ou sans préparation.

4. Dispositif selon l'une des revendications 1 à 3, **caractérisé en ce que** les moyens de sélection (2, 3, 10-13) permettent de sélectionner au moins une position de soudage choisie parmi un soudage à plat, en corniche, incliné et vertical, montant ou descendant, ou en corniche.

5. Dispositif selon l'une des revendications 1 à 4, **caractérisé en ce qu**'il est un générateur de courant de soudage comprenant un carrossage externe comportant une face (1) avant sur laquelle sont agencés lesdits moyens de sélection (2, 3, 10-13),

6. Dispositif selon la revendication 5, **caractérisé en ce que** lesdits moyens de sélection (2, 3, 10-13) sont incorporés au sein d'un bloc (2) de sélection.

7. Dispositif selon l'une des revendications 1 à 6, **caractérisé en ce que** lesdits moyens de sélection (2, 3, 10-13) coopèrent avec des moyens de mémorisation de manière à sélectionner et à afficher, sur des moyens d'affichage, une ou plusieurs informations choisies parmi la vitesse du fil, le courant de soudage, la longueur d'arc, le nombre de passes à effectuer ou ayant été effectuées, le diamètre du fil, le type de gaz et le type de procédé de soudage.

8. Dispositif selon l'une des revendications 1 à 7, **caractérisé en ce que** lesdits moyens de sélection (2, 3, 10-13) comprennent un ou plusieurs boutons ou touches de sélection.

9. Dispositif selon l'une des revendications 1 à 8, **caractérisé en ce que** l'organe d'actionnement (3) mobile est déplaçable entre plusieurs positions angulaires (10-13) représentatives d'un type de joint à souder et/ou d'une position de soudage.

10. Procédé de soudage à l'arc électrique mettant en oeuvre un dispositif selon l'une des revendications 1 à 9.

11. Procédé selon la revendication 10 dans lequel :
a) on sélectionne, avant le début du soudage, au moins paramètre primaire choisi parmi le type de joint à souder, la position de soudage et leurs combinaisons, correspondant au type de joint à réaliser et/ou à la position de soudage adoptée,
b) on opère le soudage des pièces à assembler après avoir effectué la sélection de l'étape a).

12. Procédé selon la revendication 11, **caractérisé en ce que** :
- le type de joint à souder est choisi parmi les assemblages à clin, en soyage, bout-à-bout ou en angle, avec ou sans préparation, et
- la position de soudage est choisie parmi un soudage à plat, en corniche, incliné et vertical, montant ou descendant, ou en corniche.

## Claims

1. Welding device comprising selection means (2, 3, 10-13) for allowing an operator to select, before the start of welding, at least one primary parameter chosen from the type of welded joint, the welding position and combinations thereof, the selection means being able to be operated by the operator using his hand or fingers, **characterized in that**:
- said selection means (2, 3, 10-13) comprise at least one actuating member (3) that can move between several positions, each of said positions corresponding to a type of welded joint and/or to a welding position; and
- said positions (10-13) are identified by diagrams or identifiers corresponding to said various types of welded joints and welding positions so as to allow the operator to directly select the type of welded joint and/or a welding position by operating said movable actuating member (3) and positioning it opposite one of said identified positions (10-13).

2. Device according to Claim 1, **characterized in that** the selection means (2, 3, 10-13) also make it possible to select one or more secondary parameters chosen from the thickness to be welded, the type of metal to be welded, the nature or the diameter of the welding wire, the type of gas to be used, the type of welding process and the type of transfer mode desired.

3. Device according to either of Claims 1 and 2, **characterized in that** the selection means (2, 3, 10-13) make it possible to select at least one type of welded joint chosen from lap welds, plunge welds, and butt or angle welds, with or without preparation.

4. Device according to one of Claims 1 to 3, **characterized in that** the selection means (2, 3, 10-13) make it possible to select at least one welding position chosen from flat-position, horizontal-vertical, inclined and vertical, upward or downward, or horizontal-vertical welding.

5. Device according to one of Claims 1 to 4, **characterized in that** it is a welding current generator comprising an external body having a front panel (1) on which said selection means (2, 3, 10-13) are placed.

6. Device according to Claim 5, **characterized in that** said selection means (2, 3, 10-13) are incorporated into a selection unit (2).

7. Device according to one of Claims 1 to 6, **characterized in that** said selection means (2, 3, 10-13) cooperate with memory means so as to select and display, on display means, one or more items of information chosen from the wire speed, the welding current, the arc length, the number of passes to be made or that have been made, the diameter of the wire, the type of gas and the type of welding process.

8. Device according to one of Claims 1 to 7, **characterized in that** said selection means (2, 3, 10-13) include one or more selection buttons or keys.

9. Device according to one of Claims 1 to 8, **characterized in that** the movable actuating member (3) can move between several angular positions (10-13) representative of a type of welded joint and/or a welding position.

10. Electric-arc welding process employing a device according to one of Claims 1 to 9.

11. Process according to Claim 10, in which:
a) at least one primary parameter, chosen from the type of welded joint, the welding position and combinations thereof, corresponding to the type of joint to be produced and/or to the welding position adopted, is selected before the start of welding; and
b) the work pieces to be joined are welded after having made the selection in step a).

12. Process according to Claim 11, **characterized in that**:
- the type of welded joint is chosen from lap welds, plunge welds, and butt or angle welds, with or without preparation; and
- the welding position is chosen from flat-position, horizontal-vertical, inclined and vertical, upward or downward, or horizontal-vertical welding.

## Patentansprüche

1. Schweißvorrichtung, mit Auswahlmitteln (2, 3, 10-13), die einer Bedienungsperson ermöglichen, vor dem Beginn des Schweißens wenigstens einen primären Parameter auszuwählen, der unter dem Schweißnaht-Typ, der Schweißposition und Kombinationen hiervon gewählt wird, wobei die Auswahlmittel durch die Bedienungsmittel manuell oder digital betätigbar sind, **dadurch gekennzeichnet, dass**:
- die Auswahlmittel (2, 3, 10-13) wenigstens ein Betätigungsorgan (3) enthalten, das zwischen mehreren Positionen beweglich ist, wobei jede dieser Positionen einem Schweißnaht-Typ und/oder einer Schweißposition entspricht, und
- die Positionen (10-13) durch Schaubilder oder Koordinaten bezeichnet sind, die den verschiedenen Typen von Schweißnähten und -positionen entsprechen, derart, dass der Bedienungsperson ermöglicht wird, eine Auswahl eines Schweißnaht-Typs und/oder einer Schweißposition direkt durch Betätigen des beweglichen Betätigungsorgans (3) und durch seine Positionierung gegenüber einer dieser bezeichneten Positionen (10-13) auszuführen.

2. Vorrichtung nach Anspruch 1, **dadurch gekennzeichnet, dass** die Auswahlmittel (2, 3, 10-13) außerdem ermöglichen, einen oder mehrere sekundäre Parameter auszuwählen, die unter der Schweißdicke, dem Typ des zu verschweißenden Metalls, der Natur oder dem Durchmesser des Schweißdrahts, dem Typ des zu verwendenden Gases, dem Typ des Schweißverfahrens und dem Typ der gewünschten Eintragbetriebsart gewählt werden.

3. Vorrichtung nach einem der Ansprüche 1 oder 2, **dadurch gekennzeichnet, dass** die Auswahlmittel (2, 3, 10-13) ermöglichen, wenigstens einen Schweißnaht-Typ auszuwählen, der gewählt wird unter der Sofortzusammenfügung, dem Zusammenfügen mit Ziehen, dem Zusammenfügen Stoß an Stoß oder angewinkelt, mit oder ohne Vorbereitung.

4. Vorrichtung nach einem der Ansprüche 1 bis 3, **dadurch gekennzeichnet, dass** die Auswahlmittel (2, 3, 10-13) ermöglichen, wenigstens eine Schweißposition auszuwählen, die ausgewählt wird aus einer ebenen Schweißung, einer gekrümmten Schweißung, geneigt oder vertikal, ansteigend oder abfallend oder gekrümmt.

5. Vorrichtung nach einem der Ansprüche 1 bis 4, **dadurch gekennzeichnet, dass** sie ein Schweißstrom-Generator ist, der eine äußere Verkleidung besitzt, die eine Vorderseite (1) besitzt, an der die Auswahlmittel (2, 3, 10-13) angeordnet sind.

6. Vorrichtung nach Anspruch 5, **dadurch gekennzeichnet, dass** die Auswahlmittel (2, 3, 10-13) in einen Auswahlblock (2) eingebaut sind.

7. Vorrichtung nach einem der Ansprüche 1 bis 6, **dadurch gekennzeichnet, dass** die Auswahlmittel (2, 3, 10-13) mit Speichermitteln zusammenwirken, derart, dass auf Anzeigemitteln eine oder mehrere Informationen ausgewählt und angezeigt werden, die ausgewählt sind aus der Geschwindigkeit des Drahts, dem Schweißstrom, der Lichtbogenlänge, der Anzahl von auszuführenden oder bereits ausgeführten Durchläufen, dem Drahtdurchmesser, dem Typ des Gases und dem Typ des Schweißverfahrens.

8. Vorrichtung nach einem der Ansprüche 1 bis 7, **dadurch gekennzeichnet, dass** die Auswahlmittel (2, 3, 10-13) einen oder mehrere Auswahlknöpfe oder -tasten aufweisen.

9. Vorrichtung nach einem der Ansprüche 1 bis 8, **dadurch gekennzeichnet, dass** das bewegliche Betätigungsorgan (3) zwischen mehreren Winkelpositionen (10-13) verstellbar ist, die einen Schweißnaht-Typ und/oder eine Schweißposition repräsentieren.

10. Verfahren zum Lichtbogenschweißen, das eine Vorrichtung nach einem der Ansprüche 1 bis 9 verwendet.

11. Verfahren nach Anspruch 10, wobei:
a) vor dem Beginn des Schweißens wenigstens ein primärer Parameter gewählt wird, der unter dem Schweißnaht-Typ, der Schweißposition und Kombinationen hiervon gewählt wird und dem zu verwirklichenden Naht-Typ und/oder der geeigneten Schweißposition entspricht,
b) das Verschweißen von zusammenfügenden Teilen ausgeführt wird, nachdem die Auswahl des Schrittes a) vorgenommen worden ist.

12. Verfahren nach Anspruch 11, **dadurch gekennzeichnet, dass**:
- der Schweißnaht-Typ gewählt wird unter der Sofortzusammenfügung, der Zusammenfügung mit Ziehen, der Zusammenfügung Stoß an Stoß oder angewinkelt, mit oder ohne Vorbereitung, und
- die Schweißposition gewählt wird unter einer ebenen Schweißung, einer gekrümmten Schweißung, geneigt und vertikal, ansteigend oder abfallend, oder gekrümmt.
